# FASCICULE DE BREVET EUROPEEN

(11) **EP 1 717 432 B1**
(45) Date de publication et mention de la délivrance du brevet: **11.06.2008**
(21) Numéro de dépôt: 06075790.3
(22) Date de dépôt: 03.04.2006
(51) Int. Cl.: F02K 9/84, F02K 1/80

(54) **Tuyère d'éjection orientable d'un moteur d'aéronef**
Schwenkbare Schubdüse eines Flugtriebwerkes
Rotable exhaust nozzle for an aircraft engine

(30) Priorité: 26.04.2005 FR 0504154
(43) Date de publication de la demande: 02.11.2006
(73) Titulaire: SNECMA, 75015 Paris (FR)
(72) Inventeur: Bouiller, Philippe, 77210 Samoreau (FR); Franchet, Michel, 72360 Mayet (FR); Ruis, Jean-Pierre, 77281 Le Chatelet en Brie (FR)
(74) Mandataire: Nguyen, Dominique

(56) Documents cités:
- FR-A- 2 776 338
- US-A- 3 302 885
- US-A- 3 367 108

## Description

L'invention concerne une tuyère d'éjection orientable d'un moteur d'aéronef.

Il a déjà été proposé d'équiper un moteur d'aéronef avec une tuyère orientable pour améliorer la furtivité de l'aéronef grâce à la suppression des dérives et pour améliorer également sa manoeuvrabilité.

Une solution connue décrite par exemple par le document US-A-3.726.480ou FR-A-2776338, consiste à monter une tuyère orientable sur une structure de support au moyen d'un joint annulaire déformable à structure feuilletée qui est agencé entre l'extrémité amont de la tuyère et la structure de support et qui s'étend sur toute la circonférence de la tuyère. Ce joint a toutefois des dimensions relativement importantes, il est volumineux, lourd et coûteux.

L'invention a notamment pour objet une tuyère d'éjection orientable pour moteur d'aéronef, qui ait une structure simple, légère et peu coûteuse et qui soit facilement manoeuvrable.

Elle propose à cet effet une tuyère d'éjection orientable pour moteur d'aéronef, comprenant des moyens de pivotement de la tuyère autour d'au moins un axe transversal sur un carter externe du moteur et des moyens de déplacement de la tuyère autour dudit axe transversal, caractérisée en ce que les moyens de pivotement comprennent deux pivots coaxiaux diamétralement opposés à l'extérieur de la tuyère, au moins l'un de ces pivots étant relié au carter externe du moteur par une articulation monobloc élastiquement déformable.

On entend par axe transversal de la tuyère, un axe perpendiculaire à l'axe longitudinal de la tuyère. L'axe transversal vertical de pivotement de la tuyère est l'axe de lacet et l'axe transversal horizontal de pivotement de la tuyère est l'axe de tangage.

Avantageusement, chaque pivot est relié au carter externe du moteur par une articulation monobloc élastiquement déformable.

Cette articulation déformable a des dimensions relativement très faibles, elle est légère et de structure simple, peu coûteuse et facile à monter à l'extérieur de la tuyère.

Les moyens de déplacement de la tuyère autour de l'axe transversal comprennent au moins un vérin monté à l'extérieur de la tuyère sur le carter et relié à un pivot de la tuyère. Ce vérin est par exemple du type à vis et est actionné par au moins un moteur électrique et de préférence par deux moteurs électriques qui sont montés en parallèle et pilotés pour que l'un de ces moteurs puisse pallier une défaillance de l'autre moteur.

Dans un mode de réalisation préféré de l'invention, la ou chaque articulation élastiquement déformable comprend deux blocs de matériau élastiquement déformable diamétralement opposés par rapport à l'axe de pivotement et montés chacun entre le pivot et un élément de carter, une extrémité des blocs étant solidaire en rotation de l'élément de carter et leur autre extrémité étant solidaire en rotation du pivot.

Une articulation de ce type est plus simple et plus légère qu'un palier traditionnel, par exemple à roulement, elle ne présente aucun risque de grippage, elle ne nécessite aucun entretien et peut être stockée pendant une longue durée, et elle assure de plus un rappel élastique de la tuyère dans une position initiale.

Dans une première forme de réalisation, chaque bloc de l'articulation est en élastomère et a la forme d'un secteur cylindrique centré sur l'axe de pivotement.

De préférence, chaque bloc est à structure feuilletée ou lamifiée et comprend une alternance de couches d'élastomère et de lames métalliques qui sont solidaires les unes des autres, par exemple par collage.

L'extrémité amont de la tuyère a la forme d'un segment de sphère centré sur l'axe de pivotement et est guidée par une partie d'extrémité de forme complémentaire du carter externe du moteur.

Cette complémentarité de formes permet d'assurer à la fois le guidage de la tuyère en pivotement et l'étanchéité entre le carter externe du moteur et l'extrémité amont de la tuyère.

Avantageusement, la ou chaque articulation élastiquement déformable est logée dans un boîtier qui est formé par l'élément de carter et par un capot et qui comporte une entrée d'air dans sa partie amont et une sortie d'air dans sa partie aval pour établir un flux d'air de refroidissement sur l'articulation quand l'aéronef est en vol.

De manière classique, l'axe transversal de pivotement de la tuyère est un axe de lacet et le débattement angulaire de la tuyère autour de cet axe est d'environ 15° de part et d'autre d'une position médiane.

De façon générale, l'invention présente un certain nombre d'avantages importants par rapport à la technique antérieure :
- l'aéronef peut être stocké sur une longue période de temps sans entretien,
- le mécanisme de pivotement de la tuyère est très simple et particulièrement fiable,
- sa masse est faible,
- la manoeuvrabilité de l'aéronef est améliorée,
- grâce à la suppression des dérives, sa furtivité est également améliorée.

L'invention concerne également un drone équipé d'une telle tuyère orientable.

L'invention sera mieux comprise et d'autres caractéristiques, détails et avantages de celle-ci apparaîtront plus clairement à la lecture de la description qui suit, faite en référence aux dessins annexés dans lesquels :
- la figure 1 est une vue schématique de dessus et en coupe partielle d'une tuyère orientable selon l'invention ;
- la figure 2 est une demi-vue schématique en coupe axiale selon la ligne II-II de la figure 1 ;
- la figure 3 est une vue schématique en coupe d'une articulation élastique selon l'invention ;
- la figure 4 est une vue correspondant à la figure 1 et illustrant l'orientation de la tuyère ;
- la figure 5 représente schématiquement un système de commande de pivotement de la tuyère.

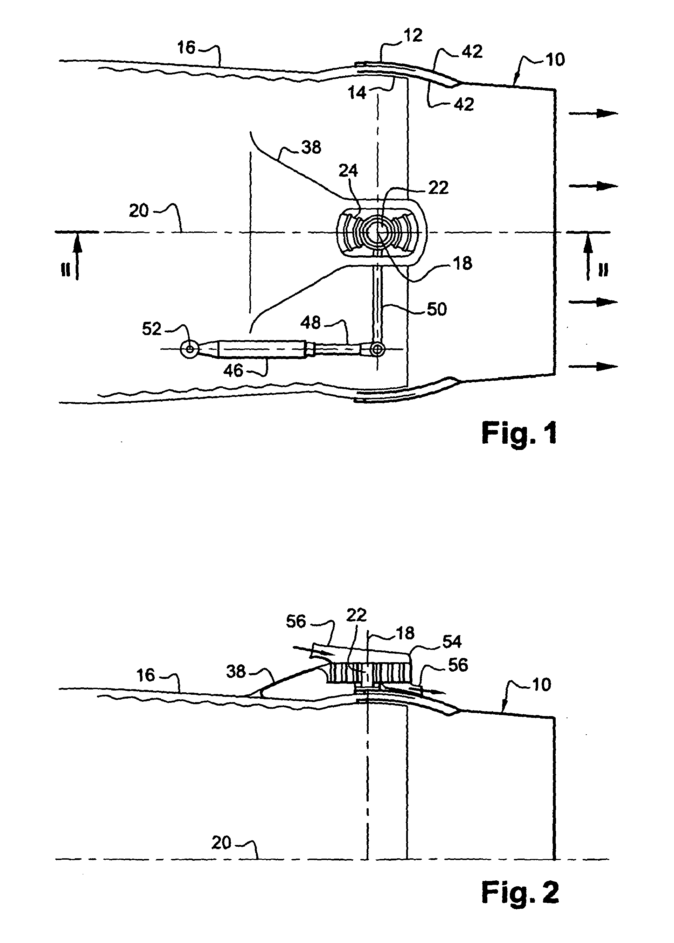

En figure 1, la tuyère d'éjection 10 d'un moteur d'un aéronef tel qu'un drone est montée, par son extrémité amont 12, sur l'extrémité aval 14 d'un élément de carter formant un conduit 16 d'éjection des gaz de combustion du moteur dans le sens indiqué par les flèches.

La tuyère 10 est articulée sur le conduit 16 autour d'un axe transversal 18 qui est un axe de lacet de l'aéronef, l'orientation de la tuyère dans un sens ou dans l'autre autour de l'axe 18 permettant de diriger l'aéronef vers la gauche ou la droite par rapport à l'axe longitudinal 20 du moteur et permettant également de supprimer les dérives pour améliorer la furtivité de l'aéronef.

L'extrémité amont 12 de la tuyère porte deux pivots cylindriques 22 diamétralement opposés, qui sont extérieurs à la tuyère et qui sont centrés et guidés en rotation sur des parties du conduit 16 au moyen d'articulations monoblocs élastiquement déformables 24 d'un type disponible dans le commerce.

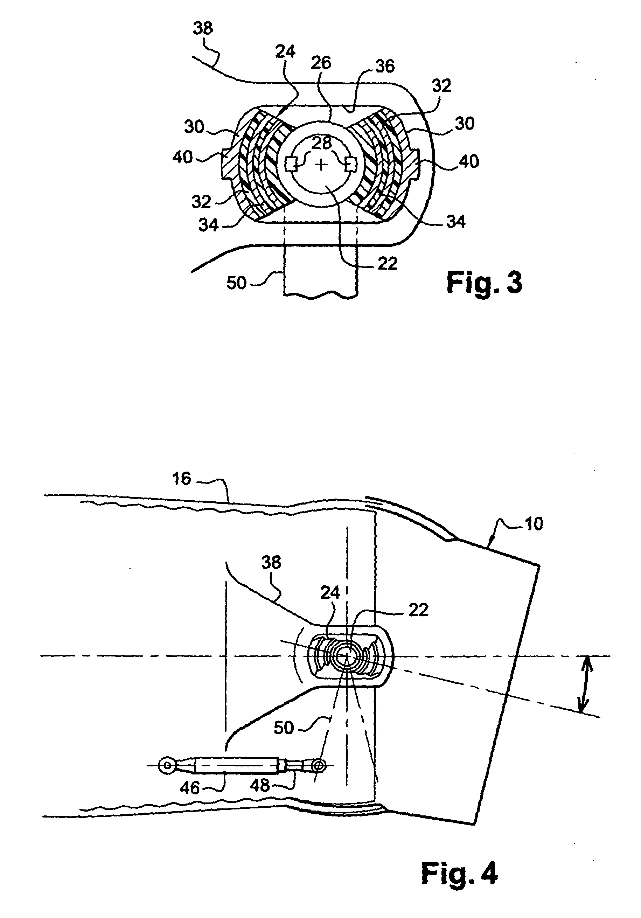

Chaque articulation 24 montée sur un pivot 22 comprend (figure 3) une bague cylindrique interne 26 enfilée sur le pivot 22 et solidarisée en rotation avec celui-ci au moyen d'une ou de deux clavettes 28 ou de tout autre moyen approprié, et une bague extérieure formée de deux secteurs de cylindre 30 diamétralement opposés, qui entourent la bague intérieure 26 et qui sont reliés à celle-ci par une alternance de couches d'élastomère 32 et de lames métalliques 34, conférant une structure feuilletée ou lamifiée à l'articulation 24.

Les couches d'élastomère 32 au nombre de trois dans l'exemple représenté et les lames métalliques 34 au nombre de deux sont des secteurs de cylindre et sont fixées les unes aux autres par collage, les couches d'élastomère radialement externe et radialement interne étant fixées par collage à la bague externe 30 et à la bague interne 26, respectivement.

La bague externe 30 de l'articulation est montée fixe en rotation dans un passage 36 d'une patte 38 solidaire du conduit 16. Ce passage 36 a en section une forme allongée correspondant à la forme externe de l'articulation 24. De plus, deux nervures 40 sont formées en saillie sur les faces externes des secteurs de cylindre 30 et sont reçues dans des rainures correspondantes du passage 36, pour éviter toute rotation de l'articulation 24 à l'intérieur de ce passage.

L'extrémité amont 12 de la tuyère 10 comporte au moins une paroi 42 en segment de sphère centrée sur l'axe de pivotement 18 et guidée sur une paroi de forme correspondante de l'extrémité aval 14 du conduit 16. Pour une meilleure étanchéité de la jonction entre l'extrémité aval 14 du conduit 16 et l'extrémité amont 12 de la tuyère 10, la paroi 42 en segment de sphère de l'extrémité amont de la tuyère est une paroi double, de même que la paroi en segment de sphère de l'extrémité aval 14 du conduit 16 et ces parois doubles sont engagées l'une dans l'autre comme représenté schématiquement aux dessins, de façon à former un joint en labyrinthe.

Le pivotement de la tuyère autour de l'axe 18 est commandé par un moyen motorisé approprié, tel qu'un vérin 46 comme représenté en figure 1, qui est monté sur le conduit 16 à l'extérieur de celui-ci et qui s'étend vers l'aval parallèlement à l'axe longitudinal 20 du moteur, la tige de piston 48 de ce vérin étant reliée à l'un des pivots 22 par une biellette 50 dont une extrémité est solidaire en rotation du pivot 22 et dont l'autre extrémité est articulée sur la tige de piston 48, le corps du vérin 46 étant articulé à son extrémité opposée en 52 sur le conduit 16.

Quand la tige de piston 48 est rétractée à l'intérieur du vérin 46 comme représenté en figure 4, la biellette 50 fait pivoter la tuyère 10 autour de l'axe de lacet 18 dans le sens des aiguilles d'une montre pour orienter le flux de gaz éjecté de la tuyère 10 vers la gauche par rapport à l'axe longitudinal 20 du moteur et donc faire tourner l'aéronef vers la gauche par rapport à sa direction initiale de vol.

Cette rotation de la tuyère déforme les articulations 24 comme représenté en figure 4. Les couches d'élastomère 32 travaillent en traction et en cisaillement et exercent sur la tuyère un couple de rappel vers sa position initiale.

Le débattement angulaire maximal de la tuyère 10 autour de l'axe 18 est d'environ 15° de part et d'autre d'une position médiane. En pratique, une rotation de 5 à 10° de la tuyère suffit pour modifier de la façon voulue le cap de l'aéronef.

Comme représenté schématiquement en figure 2, le passage contenant l'articulation 24 peut être coiffé d'un capot 54 monté sur la patte 38 et comportant le passage 36, ce capot comportant une entrée d'air 56 orientée vers l'amont pour établir, quand l'aéronef est en vol, un débit d'air de refroidissement qui passe sur l'articulation 24, une sortie d'air 58 étant prévue vers l'aval sous l'articulation 24.

Ce débit d'air de refroidissement protège l'articulation 24 de la chaleur des gaz de combustion qui sont éjectés par la tuyère 10.

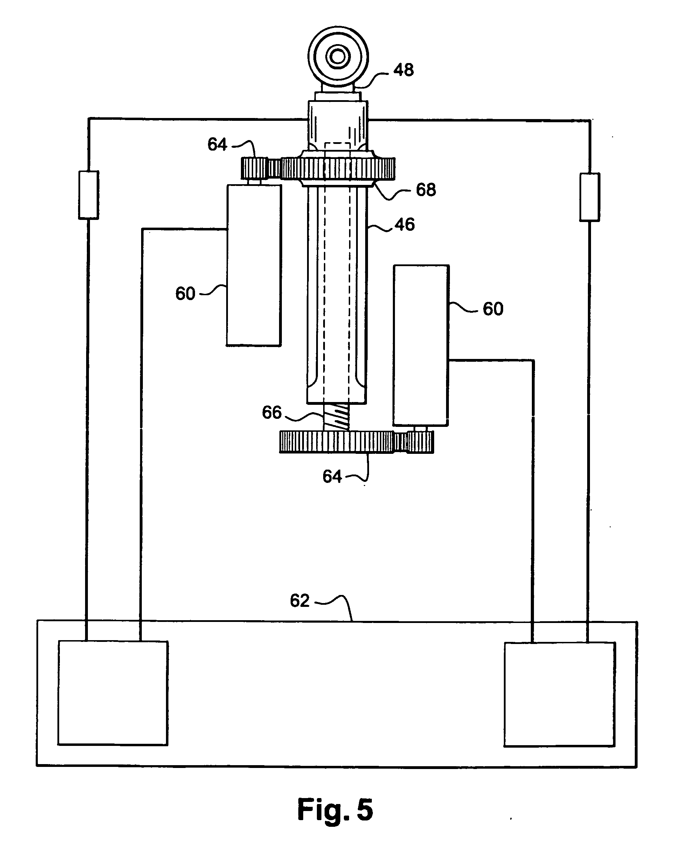

Comme représenté schématiquement en figure 5, les moyens de déplacement de la tuyère en pivotement autour de l'axe 18 sont de préférence équipés de deux moteurs électriques 60 pour l'entraînement de la tige de piston 48 du vérin 46, qui est ici un vérin mécanique à vis. Les deux moteurs 60 sont pilotés en parallèle par un circuit électronique de commande 62 et ont chacun un arbre de sortie relié par un train d'engrenages 64 à la vis 66 du vérin ou à un coulisseau extérieur 68 du corps du vérin.

Lorsque le moteur 60 dont l'arbre de sortie est relié par le train d'engrenages 64 à la vis 66 du vérin fonctionne, l'autre moteur 60 est à l'arrêt et la rotation de la tige 66 se traduit par un déplacement en translation du corps du vérin 46 le long de son axe, dans un sens ou dans l'autre, le coulisseau 68 étant fixe en rotation et formant un organe de guidage du corps du vérin 46. Inversement, lorsque le premier moteur 60 est arrêté ou ne fonctionne pas et que l'autre moteur 60 fonctionne, c'est la vis 66 du vérin qui est fixe en rotation et qui sert d'organe de guidage au corps du vérin 46 entraîné en rotation par le coulisseau 68 lui-même entraîné en rotation par le train d'engrenages 64 qui le relie à l'arbre de sortie du second moteur.

Une défaillance d'un des moteurs peut ainsi être palliée par l'autre moteur.

Bien entendu, l'invention n'est pas limitée au mode de réalisation qui a été décrit dans ce qui précède et représenté dans les dessins annexés. Par exemple, l'articulation 24 élastiquement déformable pourrait être montée à l'intérieur d'un pivot tubulaire solidaire de la tuyère, autour d'une bague fixe portée par le conduit 16 du moteur.

D'autre part, un seul des deux pivots 22 pourrait être associé à une articulation 24 élastiquement déformable.

Il serait également possible de monter la tuyère en pivotement autour d'un axe transversal de tangage, perpendiculaire à l'axe de lacet 18 et à l'axe longitudinal 20 du moteur, en utilisant une ou des articulations élastiquement déformables semblables aux articulations 24 et montées entre le conduit 16 et une bague annulaire disposée à l'intérieur de ce conduit et portant les articulations 24 définissant l'axe de lacet.

Il est également possible d'utiliser des articulations 24 élastiquement déformables qui ne sont pas à structure feuilletée ou lamifiée et dans lesquelles la bague intérieure est reliée à la bague extérieure par deux blocs d'élastomère diamétralement opposés ne comprenant pas de lames intermédiaires métalliques 34.

Dans tous les cas, ces articulations élastiquement déformables ont l'avantage d'être monoblocs et de ne pas comporter de pièce mobile, ce qui évite les risques de grippage et de blocage pendant une période prolongée de stockage. Elles ont en outre la propriété de filtrer et d'amortir les vibrations et les à-coups de fonctionnement. Elles sont de plus particulièrement fiables et ne nécessitent aucun entretien.

## Revendications

1. Tuyère d'éjection orientable pour moteur d'aéronef, comprenant des moyens de pivotement de la tuyère (10) autour d'au moins un axe transversal (18) sur un carter externe (16) du moteur et des moyens de déplacement de la tuyère autour dudit axe transversal, **caractérisée en ce que** les moyens de pivotement comprennent deux pivots (22) coaxiaux diamétralement opposés à l'extérieur de la tuyère, dont l'un au moins est relié au carter externe (16) du moteur par une articulation monobloc (24) élastiquement déformable.

2. Tuyère selon la revendication 1, **caractérisée en ce que** chaque pivot (22) est relié au carter externe (16) du moteur par une articulation monobloc (24) élastiquement déformable.

3. Tuyère selon la revendication 1 ou 2, **caractérisée en ce que** les moyens de déplacement comprennent au moins un vérin (46) monté à l'extérieur de la tuyère sur le carter (16) et relié à un pivot (22).

4. Tuyère selon l'une des revendications 1 à 3, **caractérisée en ce que** la ou chaque articulation élastiquement déformable (24) comprend deux blocs élastiquement déformables diamétralement opposés par rapport à l'axe de pivotement et montés chacun entre le pivot (22) et un élément (36, 38) de carter, une extrémité des blocs étant solidaire en rotation de l'élément de carter et leur autre extrémité étant solidaire en rotation du pivot (22).

5. Tuyère selon la revendication 4, **caractérisée en ce que** chaque bloc est en élastomère et a la forme d'un secteur cylindrique centré sur l'axe de pivotement (18).

6. Tuyère selon la revendication 4 ou 5, **caractérisée en ce que** chaque bloc est à structure feuilletée ou lamifiée et comprend une alternance de couches d'élastomère (32) et de lames métalliques (34) solidaires les unes des autres.

7. Tuyère selon l'une des revendications précédentes, **caractérisée en ce que** son extrémité amont (12) a la forme d'un segment de sphère centré sur l'axe de pivotement (18) et est guidée par une partie d'extrémité (14) de forme complémentaire du carter externe du moteur.

8. Tuyère selon l'une des revendications 4 à 7, **caractérisée en ce que** la ou chaque articulation élastiquement déformable (24) est logée dans un boîtier qui est formé par l'élément de carter et par un capot (54) et qui comporte une entrée d'air (56) dans sa partie amont et une sortie d'air (58) dans sa partie aval pour établir un flux d'air de refroidissement sur l'articulation quand l'aéronef est en vol.

9. Tuyère selon l'une des revendications précédentes, **caractérisée en ce que** les moyens de déplacement de la tuyère comprennent au moins un vérin mécanique (46) à vis, relié à un pivot (22) et actionné par au moins un moteur électrique (60).

10. Tuyère selon la revendication 9, **caractérisée en ce que** le vérin mécanique (46) est actionné par deux moteurs électriques (60) pilotés en parallèle par un circuit de commande (62).

11. Tuyère selon l'une des revendications précédentes, **caractérisée en ce que** l'axe de pivotement est un axe de lacet et **en ce que** le débattement angulaire maximal de la tuyère autour de cet axe est d'environ 15° de part et d'autre d'une position médiane.

12. Drone, **caractérisé en ce qu**'il est équipé d'une tuyère selon l'une des revendications précédentes.

## Claims

1. Swivelling exhaust nozzle for an aircraft engine, comprising means for pivoting the nozzle (10) about at least one transverse axis (18) on an external engine case (16) and means for displacing the nozzle about the said transverse axis, **characterized in that** the pivoting means comprise two diametrically opposed coaxial pivots (22) outside the nozzle, at least one of which is connected to the external engine case (16) by an elastically deformable one-piece articulation (24).

2. Nozzle according to Claim 1, **characterized in that** each pivot (22) is connected to the external engine case (16) by an elastically deformable one-piece articulation (24).

3. Nozzle according to Claim 1 or 2, **characterized in that** the displacement means comprise at least one actuator (46) mounted outside the nozzle on the case (16) and connected to a pivot (22).

4. Nozzle according to one of Claims 1 to 3, **characterized in that** the or each elastically deformable articulation (24) comprises two elastically deformable blocks which are diametrically opposed with respect to the pivoting axis and are each mounted between the pivot (22) and a case element (36, 38), one end of the blocks being rotationally fixed to the case element and their other end being rotationally fixed to the pivot (22).

5. Nozzle according to Claim 4, **characterized in that** each block is made of elastomer and has the shape of a cylindrical sector centred on the pivoting axis (18).

6. Nozzle according to Claim 4 or 5, **characterized in that** each block has a lamellar or laminated structure and comprises an alternating arrangement of elastomer layers (32) and metal strips (34) rigidly attached to one another.

7. Nozzle according to one of the preceding claims, **characterized in that** its upstream end (12) has the shape of a segment of a sphere centred on the pivoting axis (18) and is guided by a correspondingly shaped end part (14) of the external engine case.

8. Nozzle according to one of Claims 4 to 7, **characterized in that** the or each elastically deformable articulation (24) is accommodated in a housing which is formed by the case element and by a cap (54) and which has an air inlet (56) in its upstream part and an air outlet (58) in its downstream part, so as to establish a stream of cooling air over the articulation when the aircraft is in flight.

9. Nozzle according to one of the preceding claims, **characterized in that** the means for displacing the nozzle comprise at least one screw-type mechanical actuator (46) which is connected to a pivot (22) and actuated by at least one electric motor (60).

10. Nozzle according to Claim 9, **characterized in that** the mechanical actuator (46) is actuated by two electric motors (60) operated in parallel by a control circuit (62).

11. Nozzle according to one of the preceding claims, **characterized in that** the pivoting axis is a yaw axis and **in that** the maximum angular deflection of the nozzle about this axis is about 15° on either side of a central position.

12. Drone, **characterized in that** it is equipped with a nozzle according to one of the preceding claims.

## Patentansprüche

1. Verstellbare Schubdüse für einen Flugzeugmotor mit Mitteln zum Verschwenken der Düse (10) um wenigstens eine Querachse (18) an einem Außengehäuse (16) des Motors und Mitteln zum Verschieben der Düse um die Querachse, **dadurch gekennzeichnet, daß** die Verschwenkungsmittel zwei koaxiale Drehzapfen (22) aufweisen, die außerhalb der Düse diametral entgegengesetzt sind, von denen wenigstens einer mit dem Außengehäuse (16) des Motors durch ein elastisch verformbares einteiliges Gelenk (24) verbunden ist.

2. Düse nach Anspruch 1, **dadurch gekennzeichnet, daß** jeder Drehzapfen (22) mit dem Außengehäuse (16) des Motors durch ein elastisch verformbares einteiliges Gelenk (24) verbunden ist.

3. Düse nach Anspruch 1 oder 2, **dadurch gekennzeichnet, daß** die Verschiebungsmittel wenigstens einen Zylinder (46) aufweisen, der außerhalb der Düse an dem Gehäuse (16) angebracht und mit einem Drehzapfen (22) verbunden ist.

4. Düse nach einem der Ansprüche 1 bis 3, **dadurch gekennzeichnet, daß** das oder jedes elastisch verformbare Gelenk (24) zwei elastisch verformbare Blöcke aufweist, die bezüglich der Schwenkachse diametral entgegengesetzt und jeweils zwischen dem Drehzapfen (22) und einem Gehäuseelement (36, 38) angebracht sind, wobei ein Ende der Blöcke mit dem Gehäuseelement drehfest verbunden ist und ihr anderes Ende mit dem Drehzapfen (22) drehfest verbunden ist.

5. Düse nach Anspruch 4, **dadurch gekennzeichnet, daß** jeder Block aus Elastomer besteht und die Form eines zylindrischen Sektors hat, der an der Schwenkachse (18) zentriert ist.

6. Düse nach Anspruch 4 oder 5, **dadurch gekennzeichnet, daß** jeder Block eine Blatt- oder Verbundkonstruktion hat und abwechselnd Elastomerschichten (32) und metallische Lamellen (34) aufweist, die miteinander fest verbunden sind.

7. Düse nach einem der vorhergehenden Ansprüche, **dadurch gekennzeichnet, daß** ihr stromaufwärts gelegenes Ende (12) die Form eines Kugelsegments hat, das an der Schwenkachse (18) zentriert ist und durch einen Endteil (14) mit einer komplementären Form zu dem Außengehäuse des Motors geführt wird.

8. Düse nach einem der Ansprüche 4 bis 7, **dadurch gekennzeichnet, daß** das oder jedes elastisch verformbare Gelenk (24) in einem Kasten aufgenommen ist, der durch das Gehäuseelement und durch eine Haube (54) gebildet ist und der einen Lufteinlaß (56) in seinem stromaufwärts gelegenen Teil und einen Luftauslaß (58) in seinem stromabwärts gelegenen Teil aufweist, um einen Kühlluftstrom an dem Gehäuse herzustellen, wenn sich das Flugzeug im Flug befindet.

9. Düse nach einem der vorhergehenden Ansprüche, **dadurch gekennzeichnet, daß** die Verschiebungsmittel der Düse wenigstens einen mechanischen Schraubzylinder (46) aufweisen, der mit einem Drehzapfen (22) verbunden ist und durch wenigstens einen Elektromotor (60) betätigt wird.

10. Düse nach Anspruch 9, **dadurch gekennzeichnet, daß** der mechanische Zylinder (46) durch zwei Elektromotoren (60) betätigt wird, die parallel durch eine Steuerschaltung (62) geführt werden.

11. Düse nach einem der vorhergehenden Ansprüche, **dadurch gekennzeichnet, daß** die Schwenkachse eine Gierachse ist, und daß der maximale Winkelausschlag der Düse um diese Achse etwa 15° beiderseits einer Mittelposition beträgt.

12. Drohne, **dadurch gekennzeichnet, daß** sie mit einer Düse nach einem der vorhergehenden Ansprüche ausgestattet ist.
